# EUROPEAN PATENT APPLICATION

(11) **EP 0 689 869 A1**
(43) Date of publication of application: **03.01.1996**
(21) Application number: 94119554.7
(22) Date of filing: 10.12.1994
(51) Int. Cl.: B01J 19/08, B01J 19/12

(54) **Magnetizer, method for magnetization process and method for controlling chemical reaction**

(30) Priority: 28.06.1994 JP 146571/94
(71) Applicant: Fujimoto, Shigenobu, Kuga-gun, Yamaguchi 740-12 (JP); Bouzono, Hiroyuki, Hiroshima-shi, Hiroshima 730 (JP); Nakatani, Yutaka, Hiroshima-shi, Hiroshima 736 (JP)
(72) Inventor: Fujimoto, Shigenobu, Kuga-gun, Yamaguchi 740-12 (JP); Bouzono, Hiroyuki, Hiroshima-shi, Hiroshima 730 (JP); Nakatani, Yutaka, Hiroshima-shi, Hiroshima 736 (JP)
(74) Representative: Dallmeyer, Georg

(57) **Abstract**

A magnetiser wherein a magnetic fluid is flowed through a magnetic fields formed by first and second magnetic members and a magnet, or by a second magnetic member and magnetic blocks so as to magnetise the magnetic fluid. Rate of chemical reaction, state of equilibrium and other factors can be easily controlled, because the probability of the existence of free radicals can be controlled by regulating the intensity of the strong magnetic field and the distance in the magnetic field traveled by the magnetic fluid.

## Description

### BACKGROUND OF THE INVENTION

### Field of the invention

The present invention relates to a magnetizer for magnetising a magnetic fluid, a method for processing magnetisation with the magnetizer, and a method for controlling chemical reaction by regulating an amount of generating radical molecules.

### Description of Related Art

Consumption of hydrocarbon fuels as energy source has been increasing a few annually a year reliably. This has been causing grave public concern in view of the limited reserve of the hydrocarbon fuels and impact of the exhaust gas on the environment. Consequently, it is imported to improve combustion efficiency of the hydrocarbon fuels in order to use the limited resources efficiently. This relates to decreasing the exhaust gas emitted, so that the improving combustion efficiency is pressing necessity.

Combustion of hydrocarbon fuels is chemical reaction of dissociating the covalently bonded molecules of CnHm into carbon and hydrogen, and combining them with oxygen at high temperature, thereby generating carbon dioxide (carbon acid gas) and water (vapor). This is a typical chain reaction of emitting thermal energy while many free radicals which are intermediates of the reaction generate. In this combustion reaction an attempt to improve combustion efficiency of the hydrocarbon fuels has been proposed in many fields. Under the existing circumstances, however, an efficient method based on chemical theory has not disclosed yet. No practical art similar to the invention described below in detail is found.

### SUMMARY OF THE INVENTION

The present invention has been made to solve the problems described above.

Object of the invention is to provide a magnetizer, a method for magnetisation process and a method of controlling chemical reactions which are capable of efficiently controlling the chemical reactions of molecules having covalent bonds such as compounds of hydrogen, and have very high industrial utility value such as improving the combustion efficiency of hydrocarbon fuels and separation of hydrogen from water.

The magnetizer of the invention comprises a first magnetic member, a magnet holding the first magnetic member, a second magnetic member surrounding the first magnetic member and the magnet, and a fluid passage disposed in a magnetic field formed by the first magnetic member, the magnet and the second magnetic member through which the magnetic fluid to be magnetized flows.

The magnetizer of the invention comprises two magnetic blocks which include a first magnetic member having a plurality of sharp-pointed portions with such a hysteresis characteristic that has low residual magnetisation and magnets holding said first magnetic members, and keep the pointed portions of the first magnetic members in heteropolar or homopolar phase, a second magnetic member surrounding the magnetic blocks and having such a hysteresis characteristic that has low residual magnetization, and a fluid passage for flowing a magnetic fluid to be magnetized, disposed in a magnetic field formed by the magnetic blocks and the second magnetic member.

Further, the magnetizer of the invention has such a configuration that the fluid passage is installed while meandering with several turns in the magnetic field.

The method for magnetization process of the invention is a process of magnetizing a magnetic fluid including free radical molecules which have unpaired electrons, wherein the magnetic fluid to be magnetized is caused to flow through the magnetic field, thereby to control the direction of spin of the unpaired electrons of the free radical molecules.

Also the method for magnetization process of the invention is the methods for magnetization process described above, wherein the magnetic fluid is a compound of hydrogen turned into free radicals through resonance absorption of optical energy.

Further, the method of controlling chemical reactions of the invention is a method of adjusting the rate of generating of the free radical molecules of a chemical substance which has been raised to an excited state by the resonance absorption of optical energy to control such chemical reaction as the chemical substance takes part in, wherein the chemical substance which has been raised to an excited state is passed through a strong magnetic field thereby to control the direction of spin of the unpaired electrons of the free radical molecules, so as to control the rate of generating free radical molecules.

Concept of the invention will now be described in detail below together with the chemical background which led to the devise of the invention.

When a molecule is irradiated with ultraviolet light or visible light of a wavelength susceptible to resonance absorption by the molecule, bonds of atoms constituting the molecule are loosened to the extreme so that the molecule dissociates rapidly along the potential curve. This dissociation process starts with decomposition of the molecule into free radicals. Representative dissociation processes taking place in hydrocarbons are those of dissociation into methyl radical, methylene radical, methine radical, and so on.

While a chemical reaction is a changing process of chemical bonds wherein electrons form pairs, dissociation of molecules under excited state due to resonance absorption of optical energy produces free radical molecules, or radical molecules having single electron not engaged in pair (unpaired electron) as intermediates of the reaction. The radical molecule has a nature of tiny magnet and shows a peculiar characteristic in a magnetic field, thereby exerting a great influence in the chemical reaction.

A normal covalent bonded organic molecule which is stable has an even number of electrons, and does not show the nature of magnet. In a covalent bonded molecule, all electrons exist in pairs including both the electrons which contribute to the covalent bond and the electrons which do not contribute to the covalent bond, which are called the shared electron pairs and unshared electron pairs, respectively. In such electron pairs, when one electron of the pair has right-handed spin, another electron of the pair invariably has left-handed spin, thereby to cancel the intrinsic magnetic field of each other. Consequently, a normal and stable covalent bonded organic molecule does not show the nature of a magnet.

In a free radical molecule, on the other hand, single electron (unpaired electron) exists independently thus rendering the free radical the property of a magnet. When a pair of free radicals is generated as an intermediate of a reaction in the presence of a magnetic field, the chemical reaction is influenced by the magnetic field. In case a pair of electrons is broken by thermal or optical energy, two free radicals are always produced. The unpaired electrons in the free radicals sometimes spin in an opposite direction irregularly, giving right-handed or left-handed spin to both of the two free radicals produced by the decomposition.

In the substance as a whole, there exist free radicals with unpaired electrons having opposite spins and those with unpaired electrons having the same spin. In a magnetic field, however, because the electron spin is restricted by the magnetic field, free radicals with electrons of the same spin become dominant. Free radicals with electrons spinning in the same direction repulse each other and therefore never recombine. Thus because the spin direction of each electron in a pair of free radicals can be restricted in the presence of magnetic field, proportion of groups easily combined and groups not easily combined can be changed thereby making it possible to control the chemical reaction.

The present invention has been devised with the background described above, and is based on the idea of passing a magnetic fluid which includes free radicals having unpaired electron, through a strong magnetic field and thereby controlling the direction of spins of the unpaired electron.

The invention will be described in detail below taking a hydrocarbon fuel as an example of substance to be processed. Chain reactions in combustion of the hydrocarbon fuel described above invariably requires dissociation energy. In the invention, the dissociation energy is supplied artificially from the outside, thereby to control the state of dissociation. To cause resonance absorption of optical energy, for example, in order to raise the molecules of the hydrocarbon fuel to an excited state and dissociate them into radicals and make all free radicals have electrons of the same spin and repulse each other by means of the magnetic field thereby preventing the free radicals from recombining into the original molecules, is to supply from the outside the self-combustion energy which is consumed in the dissociation of the fuel during chain reactions, and the extent of its effect gives an index of the degree of improving the combustion efficiency.

In the case where water is subjected to the process, water molecules are excited and turned into radicals by resonance absorption of optical energy to dissociate the hydrogen bond with the covalent bond between hydrogen and oxygen being weakened, then it is made very easy to extract hydrogen, thereby enabling it to extract hydrogen with low energy.

The above and further objects and features of the invention will more fully be apparent from the following detailed description with the accompanying drawings.

### BRIEF DESCRIPTION OF THE DRAWINGS

Fig. 1 is a longitudinal sectional view of the magnetizer of the invention.

Fig. 2 is a cross sectional view in line X-X in Fig.18.

Fig. 3 is a cross sectional view in line Y-Y in Fig.18.

Fig. 4 is a cross sectional view in line Z-Z in Fig.18.

Fig. 5 is a diagram showing the magnetic field pattern in the magnetizer of the invention.

Fig. 6 is a diagram showing another magnetic field pattern in the magnetizer of the invention.

### DESCRIPTION OF THE PREFERRED EMBODIMENTS

The invention will be described in detail below with reference to the drawings showing embodiments thereof.

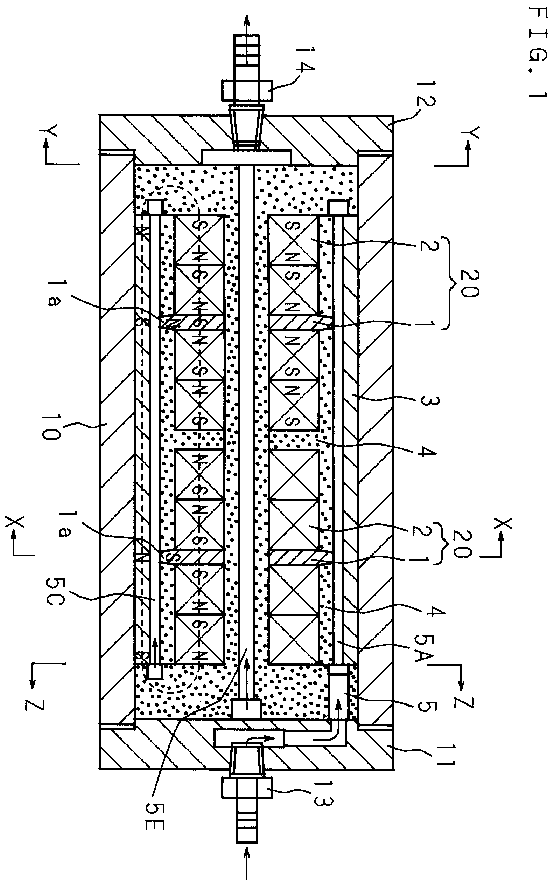

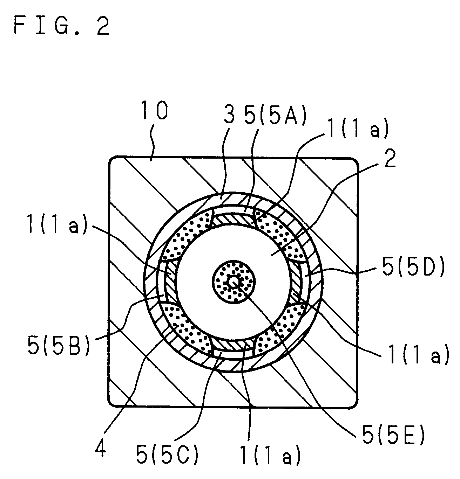

Fig. 1 is a longitudinal sectional view of the magnetizer of the invention, and Fig. 2, Fig. 3, Fig. 4 are cross sectional views in lines X-X, Y-Y and Z-Z, respectively, of Fig. 1. The description that follows will take a hydrocarbon fuel as an example of the magnetic fluid.

In the drawings, numeral 10 denotes a casing made of a non-magnetic material in a long, hollow rectangular configuration. The casing 10 has lids 11, 12 on either end thereof to form an entrance and an exit for the flow of the hydrocarbon fuel to be subjected to the magnetization process. The lids 11, 12 keep the inner space having round cross section of the casing 10 liquid-tight to shield against the outside. The lid 11 is provided with a connecting fixture 13 to connect to a passage pipe to flow the hydrocarbon fuel to be subjected to the magnetization process from the upstream side, and lid 12 is provided with a connecting fixture 14 to connect to a passage pipe to flow the hydrocarbon fuel which has been subjected to the magnetization process to the downstream side.

Installed at a specified distance from each other in the longitudinal direction inside the casing 10 are two magnetic blocks 20, 20 having such a configuration that an inner yoke 1 of flat cylindrical shape as a first ferromagnetic member, made of a ferromagnetic material with low residual magnetism and having a plurality of pointed portions 1a formed to be sharply pointed, is held by a cylindrical permanent magnet 2. An outer yoke 3 as a second ferromagnetic member made of a ferromagnetic material with low residual magnetism in a ring shape is installed to surround the magnetic blocks 20, 20 constituted of the inner yoke 1 and the permanent magnet 2. The inner yoke 1 and the outer yoke 3 are made of a ferromagnetic material having narrow hysteresis characteristic, for example, a substance specified in JIS C2504 as a preferable magnetic material. The magnetic material has magnetic flux density B1 or B2 ≧ 10,000 (G), magnetic coercive force HC (Oe) ≦ 1.0, saturation magnetic flux density B10 or B25 ≧ 15,500 (G) and tolerable residual magnetic flux density Br ≦ 50 (G).

A space between the permanent magnet 2 and the outer yoke 3, and a space between the magnetic blocks 20, 20 are filled with spacers 4 made of a non-magnetic material. However, a space between the outer yoke 3 and the sharp pointed portions 1a of the inner yoke 1 is not filled with the spacer 4 and therefore a strong magnetic field is generated therein. Intensity of the strong magnetic field is set within a range of 1,750 G and over where spins are aligned and up to 98,900 G where hydrogen can be extracted from water.

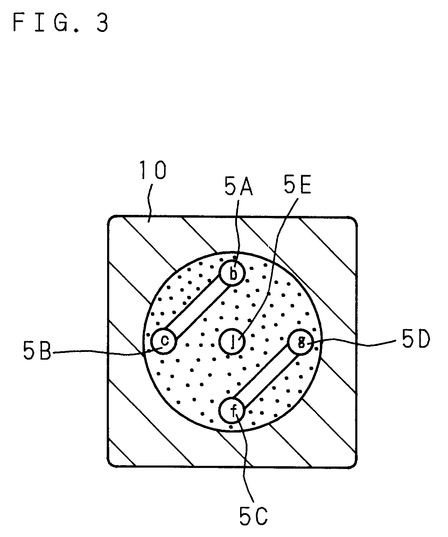

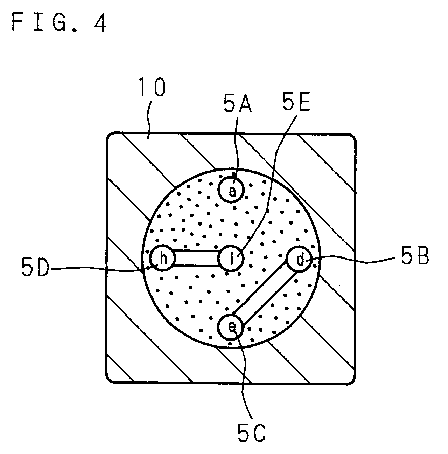

Formed in the inner space of the casing 10 is a fluid passage 5 which communicates with the connection fixture 13 at one end and with the connection fixture 14 at another end thereof, for the flow of the hydrocarbon fuel. The fluid passage 5 turns around twice near the lid 11 on the entrance side (see Fig. 4) and turns around twice near the lid 12 on the exit side (see Fig. 3) too, making forward and backward travels two and a half times in the longitudinal direction of the casing 10. Specifically, the fluid passage 5 comprises passages 5A, 5B, 5C, 5D, 5E (see Fig. 2) disposed from the upstream side. These four fluid passages 5A, 5B, 5C, 5D pass through the space between the outer yoke 3 and the sharp pointed portions 1a of the inner yoke 1.

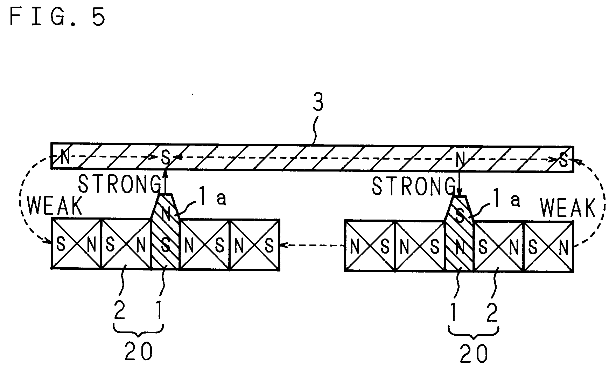

Fig. 5 is a sectional view showing the magnetic field pattern in the magnetizer of such a configuration as described above. Because there is no non-magnetic material in the space between the sharp pointed portions 1a of the inner yoke 1 and the outer yoke 3, a strong magnetic field is generated in this space. In the case where the permanent magnets 2 are disposed in the same layout of S pole and N pole in the magnetic blocks 20, 20 as shown in Fig. 5, a common magnetic field zone is formed by the magnetic blocks 20, 20. In this case, magnetic fields are at opposite directions at the entrance and the exit, while heteropolar phase is generated at the pointed portions 1a, 1a of the inner yokes 1, 1 and the strong magnetic field has opposite directions in the magnetic blocks 20, 20.

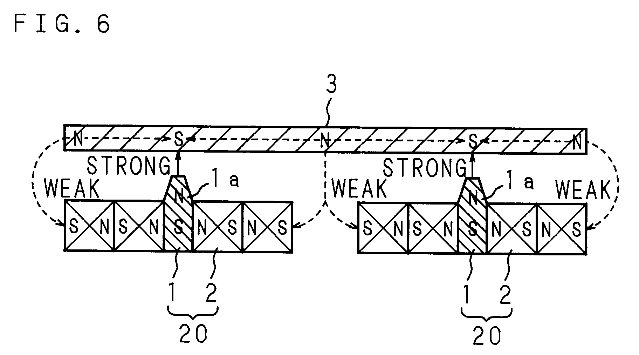

Fig. 6 is a sectional view showing another example of magnetic field pattern in the magnetizer of such a configuration as described above. In case the permanent magnets 2 are disposed in different layout of S pole and N pole in the magnetic blocks 20, 20 as shown in Fig. 6, opposing sides of the magnetic blocks 20, 20 repulse each other thereby to form independent magnetic field zones in the magnetic blocks 20, 20. In this case, the magnetic field is in the same direction at the entrance and the exit, while homopolar phase is generated at the pointed portions 1a, 1a of the inner yokes 1, 1 and the strong magnetic field has the same direction in the magnetic blocks 20, 20.

Now the operation will be described below. Fluid pipes are connected to the connection fixture 13 on the upstream side (entrance side) and to the connection fixture 14 on the downstream side (exit side), and a hydrocarbon fuel to be subjected to the magnetization process, which has been raised to excited state by resonance absorption of optical energy and dissociated into radicals, is flowed into the connecting pipe on the upstream side. The hydrocarbon fuel flows into the fluid passage 5 through the connecting fixture 13.

The hydrocarbon fuel flowed into the fluid passage 5 flows through holes shown in Fig. 3 and Fig. 4 in the order. At first, the hydrocarbon fuel passes through a hole a at the entrance side and the fluid passage 5A, then passes through the strong magnetic field between the pointed portion 1a of the inner yoke 1 and the outer yoke 3 to reach a hole b at the exit side. Then the hydrocarbon fuel turns around, passes through a hole c at the exit side and the fluid passage 5B, to pass through the strong magnetic field between the pointed portion 1a of the inner yoke 1 and the outer yoke 3 to reach a hole d at the entrance side. Then again the hydrocarbon fuel turns around, passes through a hole e at the entrance side and the fluid passage 5C, to pass through the strong magnetic field again to reach a hole f at the exit side. The hydrocarbon fuel then passes through a hole g at the exit side and the fluid passage 5D, passes through the strong magnetic field to reach a hole h at the entrance side, thereafter passes through a hole i at the entrance side and the fluid passage 5E to reach a hole j on the exit side, and flows into the fluid pipe on the down-stream side via the connection fixture 14, eventually being fed to a combustion chamber.

By making the hydrocarbon fuel pass through the strong magnetic field in the course of flowing through the passage 5 as described above, electron spins of numerous radicals of the hydrocarbon fuel are aligned in the same direction to reinforce the state of decomposition and increase the probability of dissociation. Because the hydrocarbon fuel is fed to the combustion chamber with increased probability of dissociation, the combustion efficiency thereof can be improved.

In the magnetizer described above, the probability of aligning the electron spins of free radicals in the same direction varies depending on the intensity of the magnetic field through which the hydrocarbon fuel flows and the distance in the magnetic field over which the hydrocarbon fuel travels. The higher the magnetic field intensity through which the hydrocarbon fuel passes and the longer the distance of travel in the magnetic field, the higher the probability of the electron spins of the free radicals to be aligned in the same direction, making the repulsive separation of the free radicals more certain and increasing the amount of replacement of dissociation energy during combustion, thereby making it possible to improve the combustion efficiency.

Although a case of using a hydrocarbon fuel as the magnetic fluid and improving the combustion efficiency thereof is described in the above embodiment, when water which is a hydrogen compound is processed in a similar process, it makes possible to improve the efficiency of separating hydrogen from water.

Installing an apparatus to carry out resonance absorption of infrared rays energy on the downstream side of the magnetizer of the invention in order to sustain highly dissociated state of the magnetic fluid is very preferable for the purpose of ensuring that the effects of the invention are achieved.

As described above, because the magnetic fluid is passed through a plurality of magnetic fields, the magnetic fluid can be surely decomposed into free radicals and the efficiency of combustion of hydrocarbon fuels or the efficiency of separating hydrogen from water can be improved. Also because the probability of the existence of free radicals can be controlled by means of the intensity of strong magnetic field through which the magnetic fluid passes and/or the distance in the strong magnetic field over which the fuel travels, the rate of chemical reaction, state of equilibrium and other factors wherein the magnetic fluid takes part can be easily controlled.

As this invention may be embodied in several forms without departing from the spirit of essential characteristics thereof, the present embodiment is therefore illustrative and not restrictive, since the scope of the invention is defined by the appended claims rather than by the description preceding them, and all changes that fall within metes and bounds of the claims, or equivalence of such metes and bounds thereof are therefore intended to be embraced by the claims.

## Claims

1. A magnetizer for magnetizing a magnetic fluid, comprising:
a first magnetic member;
a magnet holding said first magnetic member;
a second magnetic member surrounding said first magnetic member and said magnet; and
a fluid passage which a magnetic fluid to be magnetized flows through, and which is disposed in a magnetic field formed by said first magnetic member, said magnet and said second magnetic member.

2. A magnetizer according to claim 1, wherein
said fluid passage is disposed in such a configuration as to turn around a plurality of times back and forth in said magnetic field.

3. A magnetizer for magnetising a magnetic fluid, comprising:
two magnetic blocks which include first magnetic members having a plurality of sharp-pointed portions with such a hysteresis characteristic that has low residual magnetization and magnets holding said first magnetic members, and keep the pointed portions of said first magnetic members in heteropolar or homopolar phase with each other;
a second magnetic member surrounding said magnetic blocks and having such a hysteresis characteristic that has low residual magnetization; and
a fluid passage which a magnetic fluid to be magnetized flows through, and which is disposed in a magnetic field formed by said magnetic blocks and said second magnetic member.

4. A magnetizer according to claim 3, wherein said fluid passage is disposed in such a configuration as to turn around a plurality of times back and forth in said magnetic field.

5. A method for magnetisation process, characterized in that;
a magnetic fluid including free radical molecules having unpaired electrons is flowed through a magnetic field, thereby to control the direction of spins of the unpaired electrons of the free radical molecules, while magnetizing the magnetic fluid.

6. A method for magnetization process according to claim 5, wherein
the magnetic fluid is a compound of hydrogen which has been decomposed into free radicals through resonance absorption of optical energy.

7. A method for controlling chemical reaction, characterized in that;
the chemical substance which has been raised to an excited state through resonance absorption of optical energy is flowed through a strong magnetic field and the direction of spin of unpaired electrons of the free radical molecules is subjected to restriction, thereby to regulate the rate of generating free radical molecules and to control the chemical reaction wherein said chemical substance takes part.
